# EUROPEAN PATENT APPLICATION

(11) **EP 4 597 309 A1**
(43) Date of publication of application: **06.08.2025**
(21) Application number: 25154294.0
(22) Date of filing: 28.01.2025
(51) Int. Cl.: G06F 8/75, G06F 9/445, G06F 11/3604, G06F 21/57, G06N 3/045, G06N 20/00

(54) **METHODS AND SYSTEMS FOR PROCESSING ANALYSIS TOOL ALERTS AND FOR GENERATING PROMPTS AND FIX SUGGESTIONS FOR THE ALERTS USING AI**

(30) Priority: 31.01.2024 US 202418428420
(71) Applicant: Microsoft Technology Licensing, LLC, Redmond, WA 98052 (US)
(72) Inventor: SCHAEFER, Max, Redmond, 98052 (US); KRISTENSEN, Erik Krogh, Redmond, 98052 (US); GAZIT, Tiferet Ahavah, Redmond, 98052 (US); BOLTON, Thomas Michael, Redmond, 98052 (US)
(74) Representative: CMS Cameron McKenna Nabarro Olswang LLP

(57) **Abstract**

Systems are provided for implementing methods for generating and processing fix suggestions for alerts produced by code analysis tools. The methods involve receiving an alert, parsing the alert to identify relevant information, and assembling a prompt for a Large Language Model (LLM). The prompt includes a general description of the problem, a description of the alert message, a source-code location, and a request for a proposed fix to the alert. The prompt is sent to the LLM, and a response is obtained. The response includes a proposed fix comprising a set of edits to be applied to the source code and/or configuration files. The response is processed and validated, and a fix suggestion is assembled and provided based on the response. The fix suggestion includes a natural language explanation of the proposed fix, suggested source-code changes, and selectable options for accepting, rejecting, and editing the fix suggestion.

## Description

### BACKGROUND

Software development involves writing and maintaining source code, which is a collection of instructions that a computer can interpret and execute. Source code is typically written in a programming language, such as JavaScript, Python, Java, C++, among others. As software systems grow in complexity, the likelihood of introducing errors or vulnerabilities into the source code increases. These vulnerabilities can lead to security breaches, data loss, or other undesirable outcomes.

Code analysis tools, such as Static Application Security Testing (SAST) tools and Dynamic Application Security Testing (DAST) tools, have been developed to help identify potential vulnerabilities in source code. SAST tools analyze source code at rest, i.e., without executing it, to identify potential security vulnerabilities or other errors. DAST tools, on the other hand, analyze source code during runtime, i.e., while the code is being executed, to identify potential security vulnerabilities or errors. These tools generate alerts that provide information about the type of vulnerability detected, the location in the source code where the vulnerability was detected, and additional context that may be helpful in understanding and addressing the vulnerability.

Once an alert is generated, it typically requires a developer to manually review the alert, understand the problem, and then propose and implement a fix. This process can be time-consuming and error-prone, especially for complex code bases or for developers who may not be familiar with the specific type of vulnerability identified by the alert.

Large Language Models (LLMs), such as Generative Pretrained Transformer (GPT) models, are a type of machine learning model that can generate text based on a given prompt. LLMs have been used in a variety of applications, including natural language processing, machine translation, and text generation. These models have not been specifically trained to fix vulnerabilities or other errors associated with code, but they have general language understanding and generation capabilities that allow them to interpret prompts and generate responses in a variety of contexts.

In view of the foregoing, there is an ongoing desire for improved techniques and systems for generating fixes for security vulnerabilities and other errors that are identified in the alerts provided by code analysis tools and, even more particularly, for utilizing artificial intelligence (Al) to assist in the automated generation of these fixes to facilitate improvements in efficient processing and accuracy of the fixes.

The subject matter claimed herein is not limited to embodiments that solve any disadvantages or that operate only in environments such as those described above. Rather, this background is only provided to illustrate one exemplary technology area where some embodiments described herein may be practiced.

### SUMMARY

Disclosed embodiments include systems and methods for generating and processing fix suggestions for alerts produced by a code analysis tool. Even more particularly, disclosed embodiments include systems and methods for automatically parsing and processing alerts to generate prompts for interfacing with large language models, including GPT models that are not specifically trained for resolving the alerts, the systems and methods being further configured for automatically processing and converting the model responses to the prompts into suggestions that are formatted and presented for facilitating resolution of code vulnerabilities or other errors associated with the alerts.

In some aspects, the techniques described herein relate to a method implemented by a computing system for generating and processing fix suggestions for alerts produced by a code analysis tool, the method including the computing system: receiving an alert produced by a code analysis tool in response to source-code being processed by the code analysis tool; parsing the alert to identify at least a problem type, an alert message, and the source-code locations that are associated with the alert; generating a prompt for a LLM, the prompt including: (i) a general description of the problem type, and which may include documentation on how to fix the problem, (ii) a description of the alert message, (iii) the source-code location, the source-code location including a subset of the source-code including a code snippet of lines of the source-code with corresponding line reference numbers of the source-code, and (iv) a request for a proposed fix to the alert, the request including at least one of (a) a request for a natural language description of a proposed fix to the alert, (b) a request for a formal description of recommended code edits to apply in the proposed fix, and/or (c) a request for a list of dependencies to be added during implementation of the proposed fix; sending the prompt to the LLM; obtaining a response to the prompt from the LLM including a proposed fix that includes a set of edits to be applied to the source-code and/or configuration files associated with the source-code; processing the response to the prompt; validating the response to the prompt; and assembling and providing a fix suggestion based on the response, the fix suggestion including (i) a natural language explanation of the proposed fix, (ii) suggested source-code changes, and (iii) selectable options for accepting, rejecting and editing the fix suggestion.

The fix suggestion may also include additional information about the dependencies, if any, that are identified in the fix suggestion, as well as any known security vulnerabilities in those dependencies and other related metadata (e.g., statistics of use and popularity) for those dependencies. This additional information may be obtained from a locally stored database or a third-party database, independent of the LLM.

In some aspects, the techniques described herein relate to in response to detecting user input selecting an option for accepting the fix suggestion, automatically propagating changes to the source code that are identified in the fix suggestion. The techniques can also include acts for editing the fix suggestion, such as by presenting the fix suggestion within an in-browser code editor and receiving and applying user input for modifying the fix suggestion.

In some aspects, a system is provided for generating and processing fix suggestions for alerts produced by a code analysis tool, the system comprising: a code analysis tool configured to process source-code and produce an alert; a parser configured to parse the alert and identify a problem type, an alert message, and a source-code location associated with the alert; a prompt assembler configured to assemble a prompt for a Large Language Model (LLM), the prompt including a general description of the problem type, a description of the alert message, the source-code location, and a request for a proposed fix to the alert; a communication module configured to send the prompt to the LLM and obtain a response to the prompt from the LLM, the response comprising a proposed fix that includes a set of edits to be applied to the source-code and/or configuration files associated with the source-code; a processor configured to process the response to the prompt and validate the response to the prompt; and a fix suggestion assembler configured to assemble and provide a fix suggestion based on the response, the fix suggestion including a natural language explanation of the proposed fix, suggested source-code changes, and selectable options for accepting, rejecting and editing the fix suggestion.

This Summary is provided to introduce a selection of concepts that are further described below in the Detailed Description. This Summary is not intended to identify key features or essential features of the claimed subject matter, nor is it intended to be used as an aid in determining the scope of the claimed subject matter.

Additional features and advantages will be set forth in the description which follows, and in part will be obvious from the description, or may be learned by the practice of the teachings herein. Features and advantages of the invention may be realized and obtained by means of the instruments and combinations particularly pointed out in the appended claims. Features of the present invention will become more fully apparent from the following description and appended claims or may be learned by the practice of the invention as set forth hereinafter.

### BRIEF DESCRIPTION OF THE DRAWINGS

In order to describe the manner in which the above-recited and other advantages and features can be obtained, a more particular description of the subject matter briefly described above will be rendered by reference to specific embodiments which are illustrated in the appended drawings. Understanding that these drawings depict only typical embodiments and are not, therefore, to be limiting in scope, embodiments will be described and explained with additional specificity and detail through the use of the accompanying drawings in which:
Figure 1 illustrates an example embodiment of a processing pipeline for an alert processing and fix suggestion generation service that processes alerts from code analysis tools and that generates fix suggestions based on processed responses received from Large Language Models in response to prompts that are generated based on the processed alerts.
Figure 2 illustrates another example embodiment of a processing pipeline for an alert processing and fix suggestion generation service, similar to that presented in Figure 1, that processes alerts from code analysis tools and that generates fix suggestions based on processed responses received from LLMs in response to prompts that are generated based on the processed alerts, but in which multiple prompts are processed.
Figure 3 illustrates an example embodiment of an alert processing and fix suggestion generation system that includes an alert parser and prompt assembler for processing alerts and for generating corresponding prompts based on the alerts which are sent to an LLM. The illustrated system also includes a fix suggestion assembler for assembling fix suggestions based on prompt responses received from the LLM in response to the prompts.
Figure 4 illustrates an example embodiment of an alert processing and fix suggestion generation system similar to the system shown in Figure 3, and which further includes the code analysis tool that generates the alerts.
Figure 5 illustrates a process flow diagram that includes acts associated with performing aspects of the disclosed embodiments.
Figure 6 illustrates an example computing environment in which a computing system incorporates and/or is utilized to perform aspects of the disclosed embodiments.

### DETAILED DESCRIPTION

Disclosed embodiments include systems, methods and devices that may be utilized for processing alerts from code analysis tools to generate prompts for LLMs and for generating fix suggestions based on responses that are received from the LLMs in response to the prompts associated with the alerts.

In some instance, the alerts that are processed are received from a code analysis tool, which may be a Static Application Security Testing (SAST) tool, a Dynamic Application Security Testing (DAST) tool, or any other tool capable of analyzing source code and producing alerts. The alerts produced by the code analysis tool are in response to the tool processing source code. The source code may be written in any programming language, such as JavaScript, Python, Java, C++, or any other language. The code analysis tool may be a local tool or a remotely located tool that is in communication through the cloud with the alert processing system.

Disclosed methods begin with the alert processing system detecting or receiving an alert produced by the code analysis tool. The alert is parsed to identify various components associated with the alert. These components may include a problem type, an alert message, and a source-code location. The problem type provides a general description of the type of problem identified by the code analysis tool. The alert message provides a specific description of the problem identified by the tool. The source-code location refers to the specific location in the source code to which the alert refers. This location may include a specific line number in a source code file, a function or method within the source code, or any other identifiable location within the source code.

In some cases, the alert may also include supplementary source-code locations that are referenced in the alert message. These supplementary locations provide additional context for the alert and may refer to other parts of the source code that are relevant to the problem identified by the alert. Additionally, the alert may include a flow path that describes the flow of data of interest through the program. The flow path may be an ordered list of source-code locations, each tagged with explanatory text. In some instances, the flow path and the corresponding source-code location that is identified will either start with or terminate with the primary alert location (e.g., a particular line of source-code).

Once an alert has been parsed and the relevant components identified, a prompt is assembled for a Large Language Model (LLM). The LLM may be a Generative Pretrained Transformer (GPT) model or any other model capable of generating text based on a given prompt. The prompt includes the general description of the problem type, the description of the alert message, and the source-code location. The prompt also includes a request for a proposed fix to the alert. This request may include a request for a natural language description of a proposed fix to the alert, a request for a formal description of recommended code edits to apply in the proposed fix, and/or a list of dependencies to be added during implementation of the proposed fix. The request for a proposed fix is designed to guide the LLM in generating a response that includes a proposed fix for the alert.

In some cases, the prompt may also include documentation for the alert. This documentation, identified during the parsing of the alert and/or that is provided by the code analysis tool with the alert, explains the issue being flagged by the alert and how to fix it in general terms. The inclusion of this documentation in the prompt can provide the LLM with additional context and guidance in generating a proposed fix. The documentation for the alert may include concrete examples of how to fix a same or related problem identified by the alert, providing the LLM with empirical examples from historical code debugging processes, to base its proposed fix on.

Because the prompt may comprise size limitations, it is sometimes beneficial to refrain from including all of the source-code in the prompt, and limit the source-code that is provided to only a snippet of the source-code, which includes the location of the source-code that is associated with the alert, while omitting other portions of the source-code that are not associated with the alert. In some instances, the source-code that is included in the prompt will include a predetermined number of source-code lines before and/or after the primary source-code line(s) that the alert identified.

By way of example, if an alert was generated for a source-code file that includes thousands of lines of code, the snippet may include a primary alert location, such as line 288, which is flagged in the alert, along with the ten lines of code preceding the alert source-code location (lines e.g., 278-287) and the ten lines following the alert source-code location (e.g., lines 289-298). The snippet included in the prompt may also include the introductory lines of code of the source-code file (e.g., lines 1-20, or another predetermined quantity of lines of code), if desired, to provide additional context. Rules can be applied, based on the different types of programming languages, to assess which lines of code are necessary and which can be omitted from the prompt.

Once the alert is processed to identify the information that is assembled into the assembled prompt (e.g., the alert type, the alert message and the source-code location(s), and supplementary locations), the assembled prompt is then sent to the LLM, which generates a response to the prompt (also referred to herein as a prompt response).

In some instances, the prompt response includes a proposed fix that includes a set of edits to be applied to the source code and/or configuration files associated with the source code. The response may also include a natural language explanation of the proposed fix. When preparing a suggested fix from the proposed fix(es) provided by the LLM, the disclosed system may also obtain related metadata and/or links for third-party libraries that are recommended to use as dependencies in the proposed fix. The response information may be received in a single response and/or in a plurality of different responses that correspond to different prompts that are iteratively sent to the LLM to obtain the desired information.

In some alternative embodiments, the rules can be applied to determine whether to send the prompts individually and/or in batches to obtain the desired information. For instances, in some alternative embodiments, a size constraint is evaluated to determine whether to split an assembled prompt into two or more related prompts associated with a same alert. For instance, if an assembled prompt exceeds the prompt size constraint, the system will automatically split the prompt into two or more separate prompts to obtain the desired information.

In some instances, the system automatically generates a plurality of prompts related to the alert, irrespective of the prompt size constraint, such as by generating a first prompt to query the LLM for a proposed fix to the alert with a request for a natural language description of a proposed fix to the alert, a second prompt for a formal description of recommended code edits to apply in the proposed fix, and/or another prompt with a request for a list of dependencies to be added during implementation of the proposed fix. In some instances, a sequence of prompts can be generated and incrementally presented to the LLM, after the initial prompt is sent, only after determining responses are being received (e.g., send first prompt, receive first prompt response, send second prompt, receive second prompt response, sent third prompt, and so forth.).

Once the prompt has been assembled, it is sent to a Large Language Model (LLM). The LLM may be a Generative Pretrained Transformer (GPT) model or any other model capable of generating text based on a given prompt. Notably, the LLM has not been specifically trained to fix vulnerabilities in code associated with the alert. Instead, it uses its general language understanding and generation capabilities to interpret the prompt and generate a response.

Subsequent to sending the prompt to the LLM, the system will receive a corresponding prompt response from the LLM which includes a proposed fix for the alert. This proposed fix includes a set of edits to be applied to the source code and/or configuration files associated with the source code. The edits are designed to address the problem identified by the alert and prevent it from occurring in the future. The response may also include a natural language explanation of the proposed fix. This explanation provides a human-readable description of the proposed fix, explaining what changes are being made to the source code and why these changes are expected to fix the problem identified by the alert.

In some cases, the response from the LLM may also include information that can be used by the system to independently query local and remote stores for metadata and/or links for third-party libraries that are recommended to use as dependencies in the proposed fix. These libraries may provide functionality that is useful or even indispensable for implementing the proposed fix. The metadata and links provide information about the libraries, such as their names, versions, and sources, allowing a user to easily find and incorporate the libraries into their code base with relevant edits and inputs provided by the user, when desired.

Once each prompt response from the LLM has been obtained, it is processed and validated. The initial processing of the prompt may include identifying syntactic and semantic errors in the response. The errors can be identified based on rules and trained logic that is applied by the system to identify the error. In some instances, upon identifying errors in the response, the system fixes the errors. By way of example, the system may change referenced line numbers in the set of edits in order to promote syntactic correctness of the suggested source-code changes. In such an example, the system may identify two duplicated numbers for lines of code (e.g., two lines numbered line 15, for instance). In this example, the system can renumber the lines of code so the lines are correctly recited as sequential numbers.

With regard to the foregoing example, it will be noted that line numbers may not form part of the source code (such as with modern programming languages). They are simply an affordance for the system to reference where it wants to make edits. These references can be generated during the prompt preparation and during the generation of the fix suggestions. This can be done, for instance, to facilitate a fuzzy-matching process for enabling a suggested edit to be applied to the correct locations within the source code. Once the fuzzy matching is done, the system can remove the line numbers and continue on to syntactic checks referenced below.

In another example, the system may validate the suggested code fixes presented in the response, testing the fixes on the original code to see if the proposed fix actually resolves the problem identified in the alert. This may include modifying the source-code file and/or the inclusion of dependencies for the source-code file based on the proposed fixes and applying the code analysis tool on the modified source-code file to verify that the previous alert issues are resolved.

In some instances, the validation includes performing simple checks that can be performed without running a complete code analysis (which may be undesirably expensive). For instance, the system can perform a simple parsing of the generated source code using a parser for the appropriate programming language to make sure it is syntactically correct, or run a compiler frontend on the code (where available) to check for semantic errors, or a linter or other lightweight analysis tool.

The system may also perform other validations, such as by running tests or Continuous Integration checks for the relevant code base (if defined).

The system may automatically perform the validation processes based on identifying the proposed fixes from the prompt response(s) using validation rules and logic that the system is trained to implement.

The validation can also, in some cases be performed in combination with the code analysis tool that produced the alert (e.g., a Static Application Security Testing (SAST) tool or a Dynamic Application Security Testing (DAST) tool)that can analyze the source-code modified with the proposed fixes to determine whether the proposed fixes will resolve the alert issues. When a proposed fix that is identified in the prompt response(s) passes the validation checks, a corresponding fix suggestion is assembled and provided to a user interface. In some instances, the fix suggestion includes the natural language explanation of the proposed fix, the suggested source-code changes, and selectable options for accepting, rejecting, and editing the fix suggestion. When a user selects a selectable option to accept the proposed fix, the system will automatically modify the source-code file and or included dependencies based on the proposed fix that is being accepted.

This proposed fix preferably includes a set of edits to be applied to the source code and/or configuration files associated with the source code. The response may also include a natural language explanation of the proposed fix and metadata and/or links for third-party libraries that are recommended to use as dependencies in the proposed fix.

The referenced processing of the response may include modifying the natural language explanation of the proposed fix. The natural language explanation, which is provided by the LLM as part of the response, provides a human-readable description of the proposed fix. This explanation may be modified during the processing of the response to ensure that it accurately reflects the proposed fix and is clear and understandable to the user. The modification of the natural language explanation may involve rephrasing, clarifying, or expanding upon the explanation provided by the LLM.

In some cases, the system may be further configured to modify the natural language explanation of the proposed fix during the processing of the response. The processor may use various techniques to modify the explanation, such as natural language processing techniques, machine learning techniques, or other suitable techniques. The processor may be configured to ensure that the modified explanation accurately describes the proposed fix, is clear and understandable to the user, and is consistent with the format and style of the rest of the fix suggestion.

Once the response from the LLM has been obtained, a fix suggestion is assembled based on the response. The fix suggestion includes a natural language explanation of the proposed fix, suggested source-code changes, and selectable options for accepting, rejecting, and editing the fix suggestion. The natural language explanation provides a human-readable description of the proposed fix, explaining what changes are being made to the source code and why these changes are expected to fix the problem identified by the alert. The suggested source-code changes provide a detailed description of the edits to be applied to the source code and/or configuration files associated with the source code. The selectable options allow a user to choose whether to accept the proposed fix, reject it, or edit it further.

In some cases, after assembling the fix suggestion, the system provides the fix suggestion to a user by displaying the fix suggestion at a user interface. This interface may be a graphical user interface (GUI) on a computer screen, a web-based interface, or any other interface suitable for displaying the fix suggestion. The interface allows a user to review the fix suggestion, select an option to accept, reject, or edit the fix suggestion, and implement the selected option.

In some cases, the LLM may generate a plurality of proposed fixes in response to the prompt. In such cases, the method may involve assembling and providing a plurality of different fix suggestions, each comprising different suggested changes to the source code. This allows the user to choose from a variety of potential fixes for the alert, increasing the likelihood of finding a fix that is suitable for their specific situation and preferences. The plurality of different fix suggestions can be presented separately and/or combined into a single composite fix suggestion. The system may also apply logic and rules to rank the different fix suggestions and present the fix suggestion that is ranked highest. The ranking of the different fix suggestions may, for instance, be based on an evaluation of which fix suggestion matches a predetermined set of user preferences and historical interactions when addressing similar types of alerts.

In some cases, the LLM used to generate the proposed fix may be a generative language model. Generative language models are capable of generating text based on a given prompt, making them well-suited for generating proposed fixes for alerts. These models have not been specifically trained to fix vulnerabilities in code associated with the alert, but use their general language understanding and generation capabilities to interpret the prompt and generate a response.

After presenting the suggested fix, and in response to detecting user input selecting an option for accepting the fix suggestion, the disclosed methods may also involve automatically propagating changes to the source code that are identified in the fix suggestion. This can involve applying the suggested source-code changes to the source code, adding the suggested dependencies to the configuration files, and/or making any other changes identified in the fix suggestion. This automatic propagation of changes reduces the amount of manual work the user has to do to implement the fix, thereby making the process of fixing alerts more efficient and less error-prone.

In some cases, the response from the LLM may include names and (optionally) versions of third-party libraries that are recommended to use as dependencies in the proposed fix. These libraries may provide functionality that is useful or even indispensable for implementing the proposed fix.

After obtaining the response from the LLM, dependency metadata for any suggested dependency included in the response may be obtained. This metadata may comprise version information, security vulnerability information, and statistic information corresponding to the quality and dependability of the suggested dependency. The version information provides details about the specific version of the dependency that is recommended for use in the proposed fix. The security vulnerability information provides details about any known security vulnerabilities associated with the suggested dependency, which can be useful for assessing the potential risks of using the dependency. In this regard, the reference to the term vulnerability should also be broadly construed to include other code problems or errors that are identifiable and identified by the code analysis tool (e.g., formatting, policy violations, semantic or syntactic errors, and so forth).

The referenced statistic information provides details about the quality and dependability of the suggested dependency, such as the number of other code bases that depend on it, the number of downloads it has received, and other similar metrics.

The obtained dependency metadata may be included in the fix suggestion. The inclusion of this metadata in the fix suggestion provides the user with additional information about the suggested dependencies, thereby enabling the user to make a more informed decision about whether to accept the proposed fix. The dependency metadata may be included in the fix suggestion in various forms. In some cases, it may be included as a natural language description of the metadata, providing a human-readable summary of the information contained in the metadata. In other cases, it may be included as a selectable link to the metadata. This link, when selected at an interface, redirects the interface to a source of the metadata, allowing the user to access the full details of the metadata.

As previously noted, the system may generate multiple fix suggestions for the same alert. In these scenarios, the system can provide the user with a range of potential suggestions to the problem identified by the alert. This can increase the likelihood of finding a fix that is suitable for the user's specific situation and preferences, thereby making the process of fixing alerts more flexible and user-friendly.

The fix generator can also use several techniques to speed up the assessment process. For example, each alert can be processed in isolation, so the work can be trivially parallelized. This can greatly reduce the time and computational resources required to assess the fix generator's performance. Moreover, the fix generator is likely to produce the same fix suggestion for the same alert, so static-analysis outcomes and test results for previously seen fix suggestions can be cached, further accelerating the assessment process. Cached fixes and fix test results as metadata can be assembled within the final suggested fixes. This avoids the expense of rerunning the analysis and/or the tests for each alert, further speeding up the assessment process.

In some cases, responses from the LLM itself can also be cached to be accessed more quickly when assembling suggested fixes for similar alerts, without requiring the need to generate new prompts.

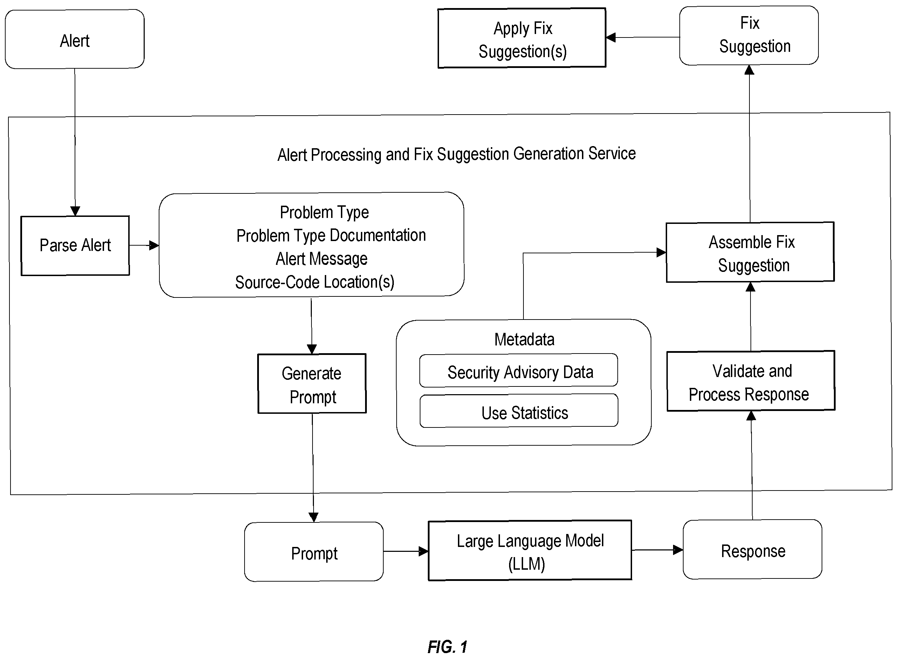

Attention will now be directed to Figure 1, which illustrates a processing pipeline for an alert processing and fix suggestion generation service which may include or be utilized by the referenced fix generator and other system components described above. This processing pipeline includes processing alerts from code analysis tools and generating fix suggestions based on processed responses received from Large Language Models in response to prompts that are generated based on the processed alerts.

The Large Language Model (LLM) used in the disclosed method may be a Generative Pretrained Transformer (GPT) model or any other model capable of generating text based on a given prompt. Notably, the LLM has not been specifically trained to fix vulnerabilities in code associated with the alert. Instead, it uses its general language understanding and generation capabilities to interpret the prompt and generate a response. This response includes a proposed fix for the alert, which comprises a set of edits to be applied to the source code and/or configuration files associated with the source code.

It is also noted that the code analysis tool that produces the alert can be any code analysis tool, including static and dynamic code analysis tools that are configured to process source code written in a specific programming language. This could be any programming language, such as JavaScript, Python, Java, C++, or any other language. The LLM, despite not being specifically trained on the particular programming language of the source code nor for resolving the particular alerts that are identified, is capable of generating a proposed fix for the alert. This is due to the LLM's general language understanding and generation capabilities, which allow it to interpret the generated prompts and formulate a response in the context of the specific programming language of the source code.

As shown, the alert is received and processed to parse information from the alert. Some of the information that is obtained includes a problem type and corresponding documentation that describes the problem and how to fix the problem, an alert message and a source-code location associated with the alert, as previously described. The system uses the information it obtains from the alert to generate one or more prompt for the LLM which is trained on general information and (according to preferred embodiments) has not been specifically trained on resolving alerts such as the parsed alert or to specifically resolve code-vulnerabilities related to the alert. In some alternative embodiments, however, the LLM is trained with training data pairs that include alert content that has been extracted from alerts similar to the alert that is parsed by the system that is paired with the suitable fix for the corresponding alert.

In some instances, the prompts are generated by including some of the alert information and portions of the source-code that the alert corresponds to, without including all information of the alert and without including the entire source-code or without including a link to the source-code. In some embodiments, the prompts that are generated only include a small portion of the source-code, such as a small snippet of original source-code with a request for the LLM to generate a replacement snippet of source-code to replace the original snippet with.

In some embodiments, the system automatically identifies relevant information from the alert to include in the prompt, based on rules and/or logic that the system is configured with. In some instances, the system or service that parses the alert is a machine-learning model trained to identify pertinent information from the alert and to generate the prompt with the pertinent information. The pertinent information included in the prompt is the information that is necessary for the LLM to identify and generate a corresponding proposed fix to the source-code for addressing the alert.

Once the prompt is generated, as shown, it can be submitted to an LLM or other model that is trained on general information to process prompts and to generate prompt responses that respond to or address the queries and commands presented in the prompts. In some instances, the LLM is a GPT model.

When the response is generated, the alert processing and fix suggestion generation system/service validates and processes the response to identify and verify proposed fixes in the prompt response. Various techniques for validating and processing the prompt response have already been described. Some additional details regarding processing of the prompt will now be further described.

In some implementations, for example, the processing of the response from the LLM may involve identifying configuration files and corresponding dependencies to be utilized. These configuration files may be identified either entirely or partially, depending on the specific requirements of the proposed fix. The configuration files may include files that specify the dependencies to be utilized, such as package.json files for JavaScript or requirements.txt files for Python. These files list the libraries and other resources that the source code depends on, and are typically used by package managers to install the correct versions of these dependencies.

The process of identifying the configuration files to which dependencies are added may involve analyzing the source code and the proposed fix to determine which libraries or other resources are being used or are recommended to be used. This analysis may be performed using various techniques, such as static analysis, dynamic analysis, or any other suitable technique. The analysis may also involve consulting a database or other source of information about known libraries or resources and their associated configuration files.

Once the configuration files to add as dependencies have been identified, they are added to the fix suggestion. This may involve generating a set of edits to the configuration files that add the identified dependencies. In some instances, the system formats the set of edits that are generated based on the code changes that are suggested by the LLM into a new format, such as a unified diff patch. The edits to the configuration files are also included in the fix suggestion along with the suggested source-code changes and the natural language explanation of the proposed fix.

In some cases, the disclosed processing may further include processing any dependencies and other identified configuration files before they are added to the fix suggestion. For example, the referenced processing may involve parsing the configuration files to determine whether the suggested dependency already exists in the configuration files. If the suggested dependency already exists, it may not be added to the fix suggestion. Alternatively, if the suggested dependency does not exist, the processing may involve determining and specifying the changes that are to be made to the configuration files to add the dependency. These changes may be determined in a language-specific manner, and may be represented in the same way as the other code changes suggested by the LLM.

After validating and processing the prompt response, the system will assemble a fix suggestion that includes relevant information from the prompt response and corresponding dependencies and metadata information, as well as the natural language description of the proposed fixes identified within the fix suggestion. The assembly process may also include generating a file that is presentable with the fix suggestion information, such as, for example, a file that is displayable with the fix suggestions within an Integrated Development Environment (IDE). In some alternative embodiments, the system may also include selectable links to access referenced dependencies and code, as well as links that are selectable to cause the system to automatically apply or reject the proposed fixes identified in the presented fix suggestion. Links can also be presented to enable a user to select the link to edit a proposed fix prior to applying the fix.

As described in more details below, the assembled fix suggestion may also include metadata that include security advisory data and use and popularity statistics for the referenced dependencies and code.

Once the fix suggestion has been assembled, it is provided to the user. It will be appreciated that the format of the assembled fix suggestion can take various forms depending on the specific requirements and preferences of the user. In some cases, the fix suggestion may be displayed at an interface. This interface may be a graphical user interface (GUI) on a computer screen, a web-based interface, or any other interface suitable for displaying the fix suggestion. The interface allows the user to review the fix suggestion, select an option to accept, reject, or edit the fix suggestion, and implement the selected option. The fix suggestion displayed at the interface includes the natural language explanation of the proposed fix, the suggested source-code changes, and selectable options for accepting, rejecting, and editing the fix suggestion.

In other cases, providing the fix suggestion may comprise sending the fix suggestion as a file to a remote system. The file may be sent over a network, such as the internet, a local area network (LAN), or any other network suitable for transmitting files. The file may be in a format that is compatible with the remote system, such as a text file, a binary file, a JSON file, or any other suitable format. The file includes the natural language explanation of the proposed fix, the suggested source-code changes, and any other information relevant to the fix suggestion. Sending the fix suggestion as a file to a remote system can be particularly useful in cases where the user wishes to review or implement the fix suggestion on a different system, or where the user wishes to store the fix suggestion for future reference.

The flow process also includes, in some instances, applying or facilitating the application of the fix suggestions, as will be described in more detail below.

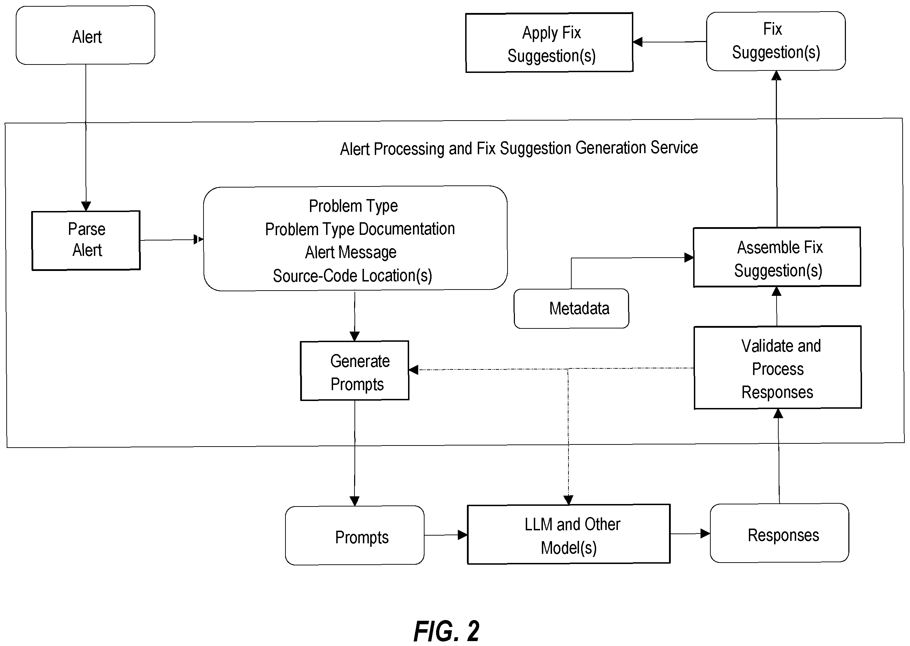

Figure 2 illustrates another example embodiment of a processing pipeline, similar to that shown in Figure 1, for an alert processing and fix suggestion generation service that processes alerts from code analysis tools and that generates fix suggestions based on processed responses received from Large Language similar to the LLMs in response to prompts that are generated based on the processed alerts.

However, unlike in Figure 1, this processing pipeline shows how the system, subsequent to (or concurrently with) the validation and processing of one response, may process and/or validate other prompt responses that are obtained from an LLM in response to prompts that are generated by the system. For example, the system may process a first response that is used to obtain information that is used to supplement the information presented in a subsequent prompt to the LLM for the same corresponding alert. For example., the first response may identify a replacement snippet of code and the subsequent prompt may identify the replacement snippet of code with a request to modify the replacement snippet of code with a different function or dependency, for example.

This illustration also shows how the system may use the LLM or another model to validate content provided in a prompt response. For instance, if a prompt response includes a proposed fix or identifies a suggested dependency to use in a proposed fix, the system may reference the same model that generated the prompt response, or another model that did not generate the prompt response, to inquire about certifications, use data and other information about the proposed fix that can be used to validate the proposed fix. Preferably, the system will query for relevant metadata for the dependencies, such as package registries and advisory databases. This information may be obtained from local and remote stores.

This illustration also indicates how the proposed fixes identified in the one or more responses can be formulated into one or more corresponding fix suggestions, as previously described.

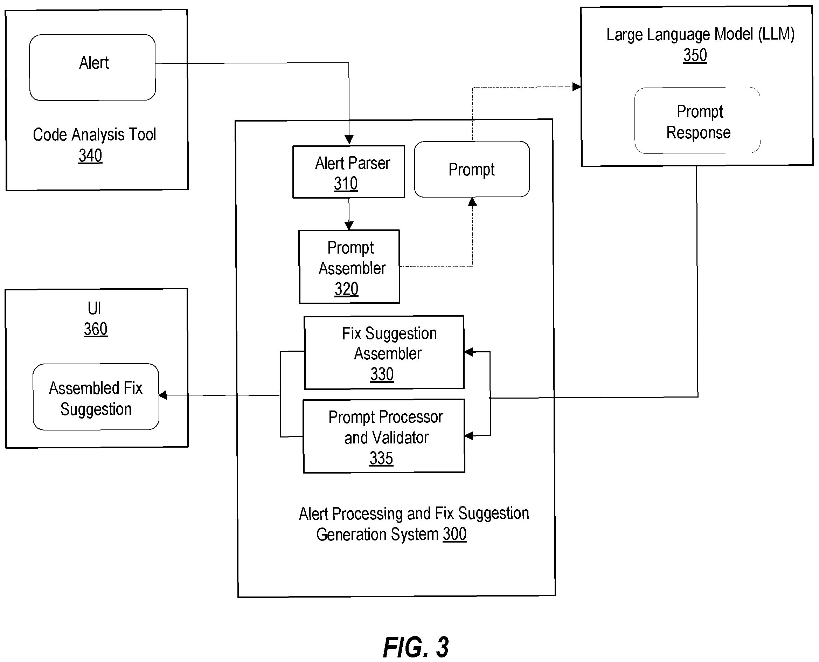

Attention will now be directed to Figure 3, which illustrates one example of an alert processing and fix suggestion generation system 300 (also referred to as system 300). This system 300 is shown to include an alert parser 310, a prompt assembler 320, a fix suggestion assembler 330 and a prompt processor and validator 335.

The alert parser 310 is configured to process and parse the alerts generated from code analysis tools, such as code analysis tool 340, which may be a static or dynamic code analysis tool (as previously described). The prompt assembler 320 uses information obtained from the alert parser 310, which include selected portions of content obtained from the alert (e.g., an alert type, an alert message that describes the alert, and a source-code location that identifies lines of the source-code corresponding to the alert) and which omits other information in the alert, such as date information, the entirety of the source-code, and other information that is determined not to be relevant for the prompt.

In some instances, the alert parser 310 and/or the prompt assembler 320 generates or provides new information that is not included in the alert and that may be relevant for the prompt, such as examples of fixes for similar types of alerts, related files or dependencies, instruction for the LLM 350 to generate natural language descriptions of the alert and/or an alert fix. The new information may also include an instruction for the LLM to generate or provide a replacement snippet of code corresponding to a snippet that is provided from the original source-code that the alert corresponds to.

The prompt is provided to remotely located LLM 350 through a network connection, such as the internet or cloud network. In some alternative embodiments, the system 300 includes the LLM 350 in a distributed configuration of the system 300.

Once the LLM 350 generates a prompt response to the prompt, the system 300 obtains the prompt response and validates and processes the prompt response with a prompt processor and validator 335 and uses a fix suggestion assembler 330, as previously described, to generate an assembled fix suggestion that is presented to a user at a Ul interface 360.

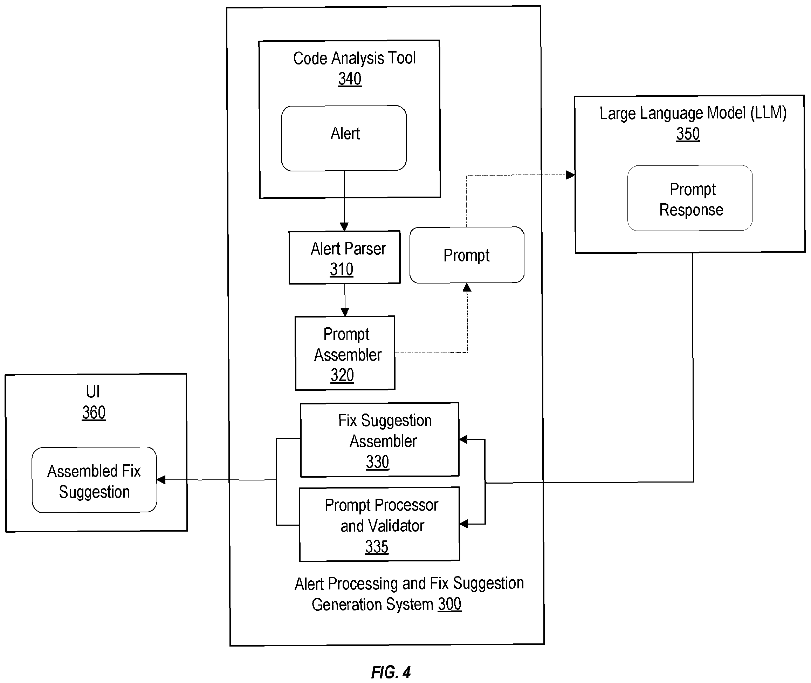

The illustration in Figure 4 is similar to that in Figure 3. However, in this illustration, the system 300 is shown to include the code analysis tool 340. Although not shown, it will be appreciated that the system may also include the UI 360, such as in a distributed enterprise network system.

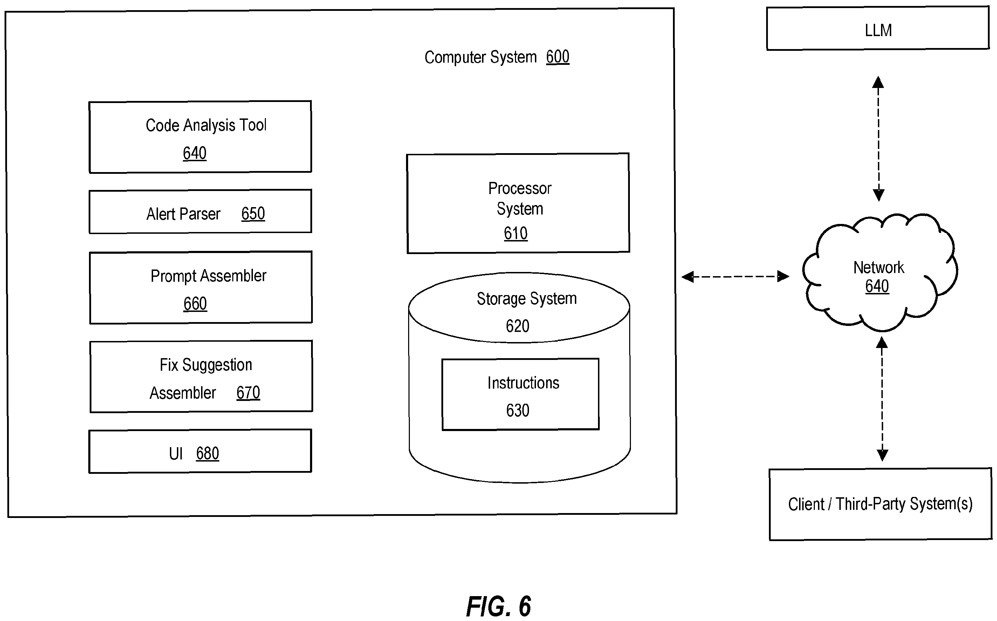

Additionally, although not shown, the system may also include storage that stores the original source-code that is being processed by the code analysis tool 340 to generate the alert, as well as the different prompts, prompt responses and assembled fix suggestions. The embodiment shown in Figure 6 illustrates such a storage that can be utilized by the system.

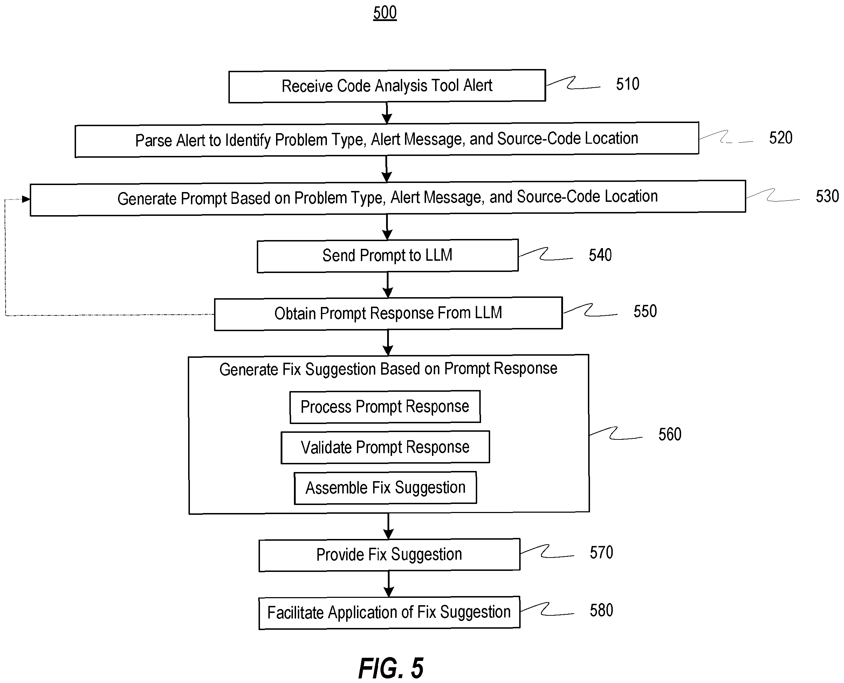

Figure 5 illustrates a process flow diagram 500 that includes acts associated with performing aspects of the disclosed embodiments and which may be implemented by the systems shown in Figures 3, 4 and 6.

As shown, the methods include the disclosed systems receiving an alert from a code analysis tool (act 510), the parsing of the alert to identify pertinent information from the alert such as the problem type, an alert message and a source-code location (act 520), each of which has been described above.

The methods also include the generation of a prompt based on the alert information (act 530), as previously described, and which may include and/or be based on the problem type, alert message and source-code location. The assembled prompt may also include instructions for providing a proposed fix (such as a replacement snippet of code to be used) and/or for describing additional information about the alert.

Once the prompt is prepared, it is provided to an LLM (act 540) that generates a corresponding prompt response. The system obtains the prompt response that includes one or more proposed fixes and/or other information about the alert (act 550) and generates a corresponding fix suggestion (act 560). The system may also generate new related prompts that include information based on the initial alert and/or information provided in a received prompt response related to a previous prompt related to or based on the alert.

During the generation of the fix suggestion based on the prompt response(s) (act 560), the system may validate the utility and capability of proposed fixes identified in the prompt response(s). The system may also process the prompt response using any of the prompt processing functionality described above, such as modifying the proposed fixes to correct errors in the proposed fixes and for obtaining related metadata about the certification, adoption and usability of the proposed fixes. The system may also assemble the proposed fixes with corresponding information and corrections into one or more fix suggestions. This may also include formatting and translating languages used with the proposed fixes. The assembling of the fix suggestions may also include generating links to referenced dependencies and configuration files and executables for instantiating proposed fixes, when selected.

The flow diagram 500 also includes an act for providing the fix suggestion(s) to a user, such as in a user interface, with links that can be selected for automatically accepting, rejecting and/or editing the proposed fixes identified in the fix suggestion (act 570).

Additionally, as previously described, the system may also trigger or facilitate the application of the fix suggestion (act 580). This may be done by providing the selectable links and by processing user input selecting the selectable links. For instance, the methods may include automatically processing proposed fixes to the original source-code in response to a user selecting one of the proposed fixes presented within the fix suggestion that is presented to the user. For example, selection of a link for replacing a snippet of several lines of code in the original source-code can trigger the system to access the original source-code and cause the system to replace the lines of code specified with a new snippet provided in the fix suggestion, and saving the modified source-code as a new modified file.

Figure 6 illustrates an example computing environment in which a computing system incorporates and/or is utilized to perform aspects of the disclosed embodiments.

### Example Computing Systems

The example computing environment shown in Figure 6 includes a computing system 600 that incorporates and/or is utilized to perform aspects of the disclosed embodiments. As shown, the computing system 600 includes a processor system 610 containing one or more processor(s) (such as one or more hardware processor(s)) and one or more hardware storage device(s) comprising a storage system 620 storing computer-readable instructions 630. The storage system 620 is able to house any number of data types and any number of computer-executable instructions by which the computing system 600 is configured to implement one or more aspects of the disclosed embodiments when the computer-executable instructions are executed by the one or more hardware processor(s).

Although not shown, the computing system 600 also includes interface(s) and input/output (I/O) device(s) to facilitate communication of the different system components.

As shown, the storage system 620 is shown as a single storage unit. However, it will be appreciated that the hardware storage device(s) of the storage system 620 can also be a distributed storage that is distributed to several separate and sometimes remote systems and/or third-party system(s).

The computing system 600 can also comprise a distributed system with one or more of the components of computing system 600 being maintained/run by different discrete systems that are remote from each other and that are connected through a network 640, such as the Internet or any network that includes a combination of wired and wireless connections. In such a distributed environment, each system performs different tasks. In some instances, a plurality of distributed systems performs similar and/or shared tasks for implementing the disclosed functionality, such as in a distributed cloud environment.

The computing system 600 may be connected with a system containing the LLM and one or more client or third-party system(s).

The computing system may also include the code analysis tool 640, alert parser 650, prompt assembler 660, fix suggestion assembler 670 and UI 680 components that have been previously described.

Embodiments of the present invention may be configured as or utilize a special-purpose or general-purpose computer including computer hardware, as discussed in greater detail below. Embodiments within the scope of the present invention also include physical and other computer-readable media for carrying or storing computer-executable instructions and/or data structures. Such computer-readable media can be any available media that can be accessed by a general-purpose or special-purpose computer system. Computer-readable media (e.g., hardware storage device(s)) that store computer-executable/computer-readable instructions are physical hardware storage media/devices that exclude transmission media. Computer-readable media that carry computer-executable instructions or computer-readable instructions in one or more carrier waves or signals are transmission media. Thus, by way of example, and not limitation, embodiments of the invention can comprise at least two distinctly different kinds of computer-readable media: physical computer-readable storage media/devices and transmission computer-readable media.

Physical computer-readable storage media/devices are hardware and include RAM, ROM, EEPROM, CD-ROM or other optical disk storage (such as CDs, DVDs, etc.), magnetic disk storage or other magnetic storage devices, or any other hardware which can be used to store desired program code means in the form of computer-executable instructions or data structures and which can be accessed by a general purpose or special purpose computer.

A "network" (e.g., network 640) is defined as one or more data links that enable the transport of electronic data between computer systems and/or modules and/or other electronic devices. When information is transferred or provided over a network or another communications connection (either hardwired, wireless, or a combination of hardwired or wireless) to a computer, the computer properly views the connection as a transmission medium. Transmission media can include a network and/or data links that can be used to carry, or desired program code means in the form of computer-executable instructions or data structures, and which can be accessed by a general purpose or special purpose computer. Combinations of the above are also included within the scope of computer-readable media.

Further, upon reaching various computer system components, computer-executable instructions or data structures can be transferred automatically from transmission computer-readable media to physical computer-readable storage media (or vice versa). For example, computer-executable instructions or data structures received over a network or data link can be buffered in RAM within a network interface module (e.g., a "NIC"), and then eventually transferred to computer system RAM and/or to less volatile computer-readable physical storage media at a computer system. Thus, computer-readable physical storage media can be included in computer system components that also (or even primarily) utilize transmission media.

Computer-executable instructions comprise, for example, instructions and data which cause a general-purpose computer, special-purpose computer, or special-purpose processing device to perform a certain function or group of functions. The computer-executable instructions may be, for example, binaries, intermediate format instructions such as assembly language, or even source code. Although the subject matter has been described in language specific to structural features and/or methodological acts, it is to be understood that the subject matter defined in the appended claims is not necessarily limited to the described features or acts described above. Rather, the described features and acts are disclosed as example forms of implementing the claims.

Those skilled in the art will appreciate that the invention may be practiced in network computing environments with many types of computer system configurations, including, personal computers, desktop computers, laptop computers, message processors, hand-held devices, multi-processor systems, microprocessor-based or programmable consumer electronics, network PCs, minicomputers, mainframe computers, mobile telephones, PDAs, pagers, routers, switches, and the like. The invention may also be practiced in distributed system environments where local and remote computer systems, which are linked (either by hardwired data links, wireless data links, or by a combination of hardwired and wireless data links) through a network, both perform tasks. In a distributed system environment, program modules may be located in both local and remote memory storage devices.

Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

### Numbered Clauses

The present invention can also be described in accordance with the following numbered clauses.

Clause 1. A method implemented by a computing system for generating and processing fix suggestions for alerts produced by a code analysis tool processing source-code, the method comprising the computing system: receiving an alert produced by a code analysis tool in response to source-code being processed by the code analysis tool; parsing the alert to identify at least a problem type, an alert message, and a source-code location that are each associated with the alert; generating a prompt for a LLM, the prompt including: (i) a general description of the problem type, (ii) a description of the alert message, (iii) the source-code location, the source-code location comprising a subset of the source-code including a code snippet of lines of the source-code with corresponding line reference numbers of the source-code, and (iv) a request for a proposed fix to the alert, the request including at least one of (a) a request for a natural language description of a proposed fix to the alert, (b) a request for a formal description of recommended code edits to apply in the proposed fix, and/or (c) a request for a list of dependencies to be added during implementation of the proposed fix; sending the prompt to the LLM; obtaining a response to the prompt from the LLM comprising a proposed fix that includes a set of edits to be applied to the source-code and/or configuration files associated with the source-code; processing the response to the prompt; validating the response to the prompt; and assembling and providing a fix suggestion based on the response, the fix suggestion including (i) a natural language explanation of the proposed fix, (ii) suggested source-code changes, and (iii) selectable options for accepting, rejecting and editing the fix suggestion.

Clause 2. In response to detecting user input selecting an option for accepting the fix suggestion, automatically propagating changes to the source code that are identified in the fix suggestion.

Clause 3. The method of clause 1, the request for the proposed fix comprising a command for the LLM to provide a list of replacement blocks or replacement descriptors that show how snippets of the source code are to be replaced with new snippets of code.

Clause 4. The method of clause 1, the prompt also including supplementary source-code locations identified during the parsing and that are referenced in the alert message.

Clause 5. The method of clause 1, the prompt also including a flow path identified during the parsing and that describes the flow of data of interest as an ordered list of source-code locations tagged with explanatory text, the flow path including the source code location.

Clause 6. The method of clause 1, the prompt also including documentation for the alert, identified during the parsing, explaining an issue being flagged and how to fix it in general terms.

Clause 7. The method of clause 6, the documentation for the alert including examples of how to fix a problem identified by the alert.

Clause 8. The method of clause 1, wherein the LLM that has not been specifically trained to fix vulnerabilities in code associated with the alert.

Clause 9. The method of clause 1, the response to the prompt also comprising a natural-language explanation of the proposed fix

Clause 10. The method of clause 1, the response to the prompt also comprising data used to identify metadata and/or links for third-party libraries that are recommended to use as dependencies in the proposed fix.

Clause 11. The method of clause 1, the processing of the response comprising changing line numbers referenced in the set of edits in order to promote syntactic correctness of the suggested source-code changes.

Clause 12. The method of clause 1, the processing of the response comprising identifying configuration files to which to add dependencies, either entirely or partially, and adding the edits to the identified configuration files to the fix suggestion.

Clause 13. The method of clause 1, wherein the processing of the response includes modifying the natural language explanation of the proposed fix.

Clause 14. The method of clause 1, the method further comprising: obtaining dependency metadata for any suggested dependency included in the response, the metadata comprising version information, security vulnerability information, and statistic information corresponding to quality and dependability of the suggested dependency; and including the dependency metadata in the fix suggestion as at least one of (i) a natural language description of the metadata or (ii) a selectable link to the metadata that is operable, when selected at an interface, to redirect the interface to a source of the metadata.

Clause 15. The method of clause 1, wherein the request for the proposed fix is provided in a plurality of different prompts, each of the plurality of different prompts including a request for a different one of (a) a natural language description of a proposed fix to the alert, (b) a formal description of recommended code edits to apply in the proposed fix, and/or (c) the list of dependencies to be added during implementation of the proposed fix.

Clause 16. The method of clause 14, wherein the method further includes: obtaining, processing and validating a plurality of responses from the LLM corresponding to different prompts and prior to assembling and presenting the fix suggestion that is further based at least in part on the plurality of responses.

Clause 17. The method of clause 1, wherein providing the fix suggestion comprises displaying the fix suggestion at an interface.

Clause 18. The method of clause 1, wherein providing the fix suggestion comprises sending the fix suggestion as a file to a remote system.

Clause 19. The method of clause 1, wherein the LLM comprises a generative language model.

Clause 20. The method of clause 1, wherein the response comprises a plurality of proposed fixes and the assembling and providing the fix suggestion comprises presenting a plurality of different fix suggestions that each comprise different suggested changes to the source-code.

Clause 21. The method of clause 1, wherein the code analysis tool is a Static Application Security Testing (SAST) tool.

Clause 22. The method of clause 1, wherein the code analysis tool is a Dynamic Application Security Testing (DAST) tool.

Clause 23. The method of clause 1, wherein the Large Language Model (LLM) is a Generative Pretrained Transformer (GPT) model.

Clause 24. The method of clause 1, wherein the source-code location includes a specific line number in a source code file.

Clause 25. The method of clause 1, wherein the prompt further includes supplementary source-code locations referenced in the alert message.

Clause 26. The method of clause 1, wherein the prompt further includes a flow path describing the flow of data of interest through the program.

Clause 27. The method of clause 1, wherein the response from the LLM is validated by checking for syntax errors in the proposed fix.

Clause 28. The method of clause 1, wherein the response from the LLM is validated by checking for semantic errors in the proposed fix.

Clause 29. A system for generating and processing fix suggestions for alerts produced by a code analysis tool, the system comprising: a code analysis tool configured to process source-code and produce an alert; a parser configured to parse the alert and identify a problem type, an alert message, and a source-code location associated with the alert; a prompt assembler configured to assemble a prompt for a Large Language Model (LLM), the prompt including a general description of the problem type, a description of the alert message, the source-code location, and a request for a proposed fix to the alert; a communication module configured to send the prompt to the LLM and obtain a response to the prompt from the LLM, the response comprising a proposed fix that includes a set of edits to be applied to the source-code and/or configuration files associated with the source-code; a processor configured to process the response to the prompt and validate the response to the prompt; and a fix suggestion assembler configured to assemble and provide a fix suggestion based on the response, the fix suggestion including a natural language explanation of the proposed fix, suggested source-code changes, and selectable options for accepting, rejecting and editing the fix suggestion.

Clause 30. The system of clause 29, wherein the code analysis tool is configured to process source-code written in a specific programming language.

Clause 31. The system of clause 29, wherein the parser is further configured to identify supplementary source-code locations and a flow path associated with the alert.

Clause 32. The system of clause 31, wherein the prompt assembler is further configured to include the supplementary source-code locations and the flow path in the prompt for the LLM.

Clause 33. The system of clause 29, wherein the communication module is further configured to send multiple prompts to the LLM and obtain multiple responses from the LLM, each response comprising a different proposed fix.

Clause 34. The system of clause 33, wherein the processor is further configured to process and validate each of the multiple responses, and the fix suggestion assembler is further configured to assemble and provide multiple fix suggestions based on the multiple responses.

Clause 35. The system of clause 29, wherein the processor is further configured to modify the natural language explanation of the proposed fix during the processing of the response.

Clause 36: Systems are provided for implementing methods for generating and processing fix suggestions for alerts produced by code analysis tools. The methods involve receiving an alert, parsing the alert to identify relevant information, and assembling a prompt for a Large Language Model (LLM). The prompt includes a general description of the problem, a description of the alert message, a source-code location, and a request for a proposed fix to the alert. The prompt is sent to the LLM, and a response is obtained. The response includes a proposed fix comprising a set of edits to be applied to the source code and/or configuration files. The response is processed and validated, and a fix suggestion is assembled and provided based on the response. The fix suggestion includes a natural language explanation of the proposed fix, suggested source-code changes, and selectable options for accepting, rejecting, and editing the fix suggestion.

## Claims

1. A method implemented by a computing system for generating and processing fix suggestions for alerts produced by a code analysis tool processing source-code, the method comprising the computing system:
receiving an alert produced by a code analysis tool in response to source-code being processed by the code analysis tool;
parsing the alert to identify at least a problem type, an alert message, and a source-code location that are each associated with the alert;
generating a prompt for a LLM, the prompt including:
(i) a general description of the problem type,
(ii) a description of the alert message,
(iii) the source-code location, the source-code location comprising a subset of the source-code including a code snippet of lines of the source-code with corresponding line reference numbers of the source-code, and
(iv) a request for a proposed fix to the alert, the request including at least one of (a) a request for a natural language description of a proposed fix to the alert, (b) a request for a formal description of recommended code edits to apply in the proposed fix, and/or (c) a request for a list of dependencies to be added during implementation of the proposed fix;
sending the prompt to the LLM;
obtaining a response to the prompt from the LLM comprising a proposed fix that includes a set of edits to be applied to the source-code and/or configuration files associated with the source-code;
processing the response to the prompt;
validating the response to the prompt; and
assembling and providing a fix suggestion based on the response, the fix suggestion including (i) a natural language explanation of the proposed fix, (ii) suggested source-code changes, and (iii) selectable options for accepting, rejecting and editing the fix suggestion.

2. The method of claim 1, wherein in response to detecting user input selecting an option for accepting the fix suggestion, the method further includes automatically propagating changes to the source code that are identified in the fix suggestion.

3. The method of claim 1, the request for the proposed fix comprising a command for the LLM to provide a list of replacement blocks or replacement descriptors that show how snippets of the source code are to be replaced with new snippets of code.

4. The method of claim 1, the prompt also including supplementary source-code locations identified during the parsing and that are referenced in the alert message.

5. The method of claim 1, the prompt also including a flow path identified during the parsing and that describes the flow of data of interest as an ordered list of source-code locations tagged with explanatory text, the flow path including the source code location.

6. The method of claim 1, the prompt also including documentation for the alert, identified during the parsing, explaining an issue being flagged and how to fix it in general terms.

7. The method of claim 6, the documentation for the alert including examples of how to fix a problem identified by the alert.

8. The method of claim 1, wherein the LLM that has not been specifically trained to fix vulnerabilities in code associated with the alert.

9. The method of claim 1, the response to the prompt also comprising a natural-language explanation of the proposed fix

10. The method of claim 1, the response to the prompt also comprising metadata and/or links for third-party libraries that are recommended to use as dependencies in the proposed fix.

11. The method of claim 1, the processing of the response comprising changing line numbers referenced in the set of edits in order to promote syntactic correctness of the suggested source-code changes.

12. The method of claim 1, the processing of the response comprising identifying configuration files to which to add dependencies , either entirely or partially, and adding edits to the identified configuration files to the fix suggestion.

13. The method of claim 1, wherein the processing of the response includes modifying the natural language explanation of the proposed fix.

14. The method of claim 1, the method further comprising:
obtaining dependency metadata for any suggested dependency included in the response, the metadata comprising version information, security vulnerability information, and statistic information corresponding to quality and dependability of the suggested dependency; and
including the dependency metadata in the fix suggestion as at least one of (i) a natural language description of the metadata or (ii) a selectable link to the metadata that is operable, when selected at an interface, to redirect the interface to a source of the metadata.

15. The method of claim 1, wherein the request for the proposed fix is provided in a plurality of different prompts, each of the plurality of different prompts including a request for a different one of (a) a natural language description of a proposed fix to the alert, (b) a formal description of recommended code edits to apply in the proposed fix, and/or (c) the list of dependencies to be added during implementation of the proposed fix.
